# EUROPÄISCHE PATENTANMELDUNG

(11) **EP 1 235 286 A2**
(43) Veröffentlichungstag der Anmeldung: **28.08.2002**
(21) Anmeldenummer: 02001556.6
(22) Anmeldetag: 23.01.2002
(51) Int. Cl.: H01M 4/02, H01M 4/66

(54) **Galvanisches Element mit mindestens einer lithiuminterkalierenden Elektrode**

(30) Priorität: 23.02.2001 DE 10108695
(71) Anmelder: Microbatterie GmbH, 30419 Hannover (DE)
(72) Erfinder: Haug, Peter, Dr., 73479 Ellwangen (DE); Birke, Peter, Dr., 73479 Ellwangen (DE); Holl, Konrad, Dr., 73434 Aalen-Dewangen (DE); Ilic, Dejan, Dr., 73479 Ellwangen (DE)
(74) Vertreter: Kaiser, Dieter Ralf, Dipl.-Ing.

(57) **Zusammenfassung**

Bei einem galvanischen Element mit mindestens einer lithiuminterkalierenden Elektrode, deren elektrochemisch aktives Material auf einen folienförmigen metallischen Ableiter aufgebracht ist, ist der metallische Ableiter auf seiner Oberfläche mit elektrochemisch abgeschiedenen Kristalliten eines zweiten oder identischen Metalles versehen, die die Kontaktfläche vergrößern und den Übergangswiderstand zum aktiven Material verringem.

Das Trägermaterial ist ausgewählt aus Al, Cu, V, Ti, Cr, Fe, Ni, Co oder Legierungen dieser Metalle oder aus einem korrosionsbeständigen Edelstahl, das abgeschiedene Metall ist ausgewählt aus Cu, V, Ti, Cr, Fe, Ni, Co Zn, Sn, In, Sb, Bi, Ag oder Legierungen dieser Metalle. Die Kristallitgröße des elektrochemisch abgeschieden Materials liegt zwischen 1 und 25 µm, vorzugsweise zwischen 1 und 10 µm und auf der Trägerfolie sind maximal 10 Kristallitlagen, vorzugsweise 1 bis 3 Kristallitlagen, abgeschieden.

## Beschreibung

Gegenstand der Erfindung ist ein galvanisches Element mit mindestens einer lithiuminterkalierenden Elektrode, deren elektrochemisch aktives Material auf einen folienförmigen metallischen Ableiter aufgebracht ist.

In galvanischen Elementen bestimmt die elektrische Anbindung der Ableiterelektroden an die elektrochemisch aktiven Massen ganz maßgeblich die Funktionsfähigkeit der Zelle. Dekontaktierungen rein mechanischer Natur oder Dekontaktierungen, die durch den elektrochemischen Aufbau von Passivierungsschichten verursacht werden, zählen zu den häufigsten Gründen für ein Versagen der Zelle.

Für lithiuminterkalierende Elektroden sind die verschiedensten Ableitermaterialien bekannt. Im US-Patent 6 143 444 A1 sind Verfahren zum direkten Aufpastieren der aktiven Massen auf perforierte Folien oder Streckmetalle aus Aluminium oder Kupfer beschrieben.

Der WO 98/20566 sind Ableitergitter aus Kupfer oder Aluminium zu entnehmen, die gereinigt, chemisch geätzt und anschließend mit einem Haftvermittler versehen werden.

Im Dokument US 5 631 104 A1 sind Ableiterfolien aus Aluminium oder Kupfer offenbart, die mit den aktiven Massen beschichtet werden. Bei galvanischen Elementen in Knopfzellenform werden gemäß dieser Druckschrift die aktiven lithiuminterkalierenden Massen in aus Edelstahl bestehende Gehäusebauteile der Knopfzelle eingebracht.

Beim Elektrodenherstellungsverfahren gemäß dem Dokument US 5 460 904 A1 wird für die negative Ableiterelektrode eine Kupferfolie, vorzugsweise in Form eines Streckmetalls, in verdünnter Schwefelsäure von einer Oxidschicht befreit, dann mehrfach gespült, getrocknet und anschließend mit einer dünnen Polyvinyliden-Hexafluorpropylen-Schicht versehen, welche für wenige Sekunden bei 350°C pyrolysiert wird. Als positive Ableiterelektrode wird statt Kupfer Aluminium verwendet, welches in Aceton gereinigt, mit Natronlauge geätzt und anschließend mit einem kohlenstoffbasierten Primer versehen wird. Die so erhaltenen Ableiterelektroden werden mit den aktiven Elektroden mittels eines Heißlaminationsverfahrens verbunden.

Im allgemeinen werden bei der Herstellung von wiederaufladbaren Lithium-Polymerzellen als Ableitermaterialien Streckmetalle verwendet, auf der negativen Seite Kupfer, auf der positiven Seite Aluminium. Die Herstellung der Streckmetalle aus Folien ist aufwendig, neben dem unvermeidlichen Abfall kommt oftmals noch ein Walz- und Glühschritt hinzu. Darüber hinaus sind, wie insbesondere die US 5 460 904 zeigt, anschließende aufwendige Beschichtungen mit sogenannten Primem notwendig, um eine ausreichende Haftung der Elektroden auf den Streckmetallen zu gewährleisten.

Der Erfindung liegt die Aufgabe zugrunde, bei galvanischen Elementen mit lithiuminterkalierenden Elektroden die elektrische Anbindung der aktiven Materialien an die Ableiterfolie zu verbessern.

Diese Aufgabe wird bei einem galvanischen Element der eingangs genannten Gattung durch die kennzeichnenden Merkmale des Anspruchs 1 gelöst. In den Unteransprüchen sind vorteilhafte Ausgestaltungen der Erfindung angegeben.

Das Trägermaterial ist ausgewählt aus Al, Cu, V, Ti, Cr, Fe, Ni, Co oder Legierungen dieser Metalle oder aus einem korrosionsbeständigen Edelstahl und das abgeschiedene Metall ist ausgewählt ist aus Cu, V, Ti, Cr, Fe, Ni, Co, Zn, Sn, In, Sb, Bi, Ag oder Legierungen dieser Metalle.

Die Kristallitgröße des elektrochemisch abgeschiedenen Materials sollte zwischen 1 und 25 µm, vorzugsweise zwischen 1 und 10 µm, liegen.

Die Dicke der Trägerfolie liegt zwischen 5 und 50 µm, vorzugsweise zwischen 8 und 25 um, wobei auf der Folie maximal 10 Kristallitlagen, vorzugsweise 1 bis 3 Kristallitlagen, abgeschieden sind.

Im Fall eines unedlen oder halbedlen Metalls ist die Kristallitschicht mit einer Korrosionsschicht versehen, die durch einen Tauchvorgang aufgebrachtes Benzotriazol oder eine Chromatisierung ist. Vorzugsweise ist das aktive Elektrodenmaterial in Folienform auf diese Ableiterfolie auflaminiert.

Die erfindungsgemäßen Folien lassen sich vorteilhaft in bekannten Li-lonen-Zellen einsetzen, beispielsweise in Zellen, bei denen die Elektroden die Form eines Wickels besitzen, insbesondere aber in aus mehreren Schichten laminierten Flachzellen.

Eine sogenannte Bi-Zelle, wie sie dem US-Patent 5 460 404 A1 zu entnehmen ist, besitzt den generellen Aufbau Negative Elektrode/Cu-Streckmetall/Negative Elektrode, Separator, Positive Elektrode/AI-Streckmetall/Positive Elektrode, Separator, Negative Elektrode/Cu-Streckmetall/Negative Elektrode. Der so gewählte Aufbau wird mit einer verbesserten Sicherheit mit Kurzschluss und unsachgemäßem Öffnen einer solchen Zelle begründet. Baut man nur ein Aluminium-Streckmetall statt zwei ein, so verdoppeln sich die Belastungsströme, und diese können im kritischen Zustand offenbar ausreichen, das Aluminium lokal zu schmelzen und damit den Kontakt zu unterbrechen.

Setzt man jedoch einen an sich bekannten Polyolefinseparator mit Shut-down-Mechanismus - bei kritischen Zuständen schmelzen die Poren des Separators zu und der Zellwiderstand steigt sprunghaft an - statt eines SiO₂-PVDF-HFP basierten Separators ein, so lässt sich der Aufbau invers gestalten. Dies hat den Vorteil, dass die kinetisch langsamere Positive Elektrode wie auch das gegenüber Kupfer schlechter leitende Aluminium nun flächenmäßig verdoppelt sind.

Darüber hinaus ist bei der Herstellung dieser Lithium-Polymer-Zellen, wie in der US 5 460 904 A1 im Einzelnen erläutert wird, ein möglichst vollständiges Extrahieren des Weichmachers notwendig. Dieser Verfahrensschritt und das weiterhin notwendige Eindringen des Flüssigelektrolyten, verbunden mit dessen homogener Verteilung, führen dort zur Notwendigkeit als Ableitermaterialien Streckmetalle zu verwenden.

Erfindungsgemäß wird bei einem dazu inversen Aufbau, nämlich Positive Elektrode/Al-Streckmetall/Positive Elektrode, Separator, Negative Elektrode/Cu-Folie/Negative Elektrode, Positive Elektrode/Al-Streckmetall/Positive Elektrode eine erfindungsgemäß behandelte Elektrode verwendet, ohne einen möglichen Extraktionsschritt des Plastifizierers sowie ein anschließendes Eindringen eines Flüssigelektrolyten zu behindern.

Die daraus resultierenden Vorteile sind gravierend. Die Anbindung wird flächig, dies ist insbesondere deswegen wichtig, da Inhomogenitäten in der negativen Elektrode Polarisation, Lithiumabscheidung und damit schleichende Zerstörung provozieren können. Durch die elektrochemische Abscheidung, insbesondere von Kupferkristalliten auf eine Kupferfolie, kann auf den Primer verzichtet werden. Da die Primer generell organisch basiert sind, tragen sie in der Regel am meisten zum Fading einer Zelle bei. Dies gilt ganz besonders auf der negativen Seite, wo hohe Lithiumaktivitäten mit der Zeit organische Verbindungen insbesondere bei hohen Temperaturen schleichend degradieren. Zudem muss der Primer auf der Cu-Seite für Polymerzellen bisher in einem sehr aufwendigen Pyrolyseschritt hergestellt werden, während man auf der Al-Seite mit einem einfachen Auftragen auskommt. Fertigungstechnisch lässt sich auf eine Folie einfacher aufgießen und laminieren. Herstellungskosten, wie insbesondere Stanzvorgänge und Abfall beim Streckmetall, fallen weg, sodass sich die Kosten für Ableitermaterialien erheblich verringern.

Besonders vorteilhaft ist die Verwendung erfindungsgemäßer Folien, insbesondere der Kupferfolien bei einem Verfahren zur Herstellung von Elektrodenfolien, bei dem mindestens zwei verschiedene fluorierte Polymere in einem Lösungsmittel gelöst und ohne Zusätze von Plastifizierer, Quellmittel oder Elektrolyt lediglich mit einem hochleitfähigen Ruß, dessen BET-Oberfläche zwischen der von oberflächenminimiertem Graphit und aktiviertem Kohlenstoff liegt und mit einem elektrochemisch aktiven Material mit einer zweidimensionalen Schichtstruktur und einer elektronischen Leitfähigkeit von mindestens 10⁻⁴ S/cm, in welches Lithium reversibel ein- und ausbaubar ist, vermischt werden und die so erhaltene pastöse Masse auf einen Elektrodenableiter oder eine Trägerfolie aufgebracht und getrocknet wird. So hergestellte positive Elektrodenfolien und negative Elektrodenfolien werden auf einen Separator auflaminiert, der Stapel wird mit einem flüssigen organischen Elektrolyten getränkt und so ein galvanisches Element gebildet.

Als Polymere werden insbesondere Vinylidenfluorid und Hexafluorpropylen verwendet und als Lösungsmittel N-Methylpyrolidin-2-on oder Aceton.

Als elektrochemisch aktives Material für eine positive Elektrodenfolie wird ein Material aus der Gruppe temärer (Li-Me1-O) oder quatemärer (Li-Me1-Me2-O) Lithiumübergangsmetalloxide, wobei Me 1 und Me 2 aus einer Gruppe Ti, V, Cr, Fe, Mn, Ni, Co ausgewählt sind, verwendet, und die Verbindung enthält gegebenenfalls zusätzlich bis zu 15 Atom-Prozent Mg, Al, N oder F zur Stabilisierung der Struktur. Als elektrochemisch aktives Material der negativen Elektrodenfolie wird eine graphitisierte Kohlenstoffmodifikation verwendet. Eiri solches Verfahren ist in der deutschen Patentanmeldung P 10104988.9 beschrieben.

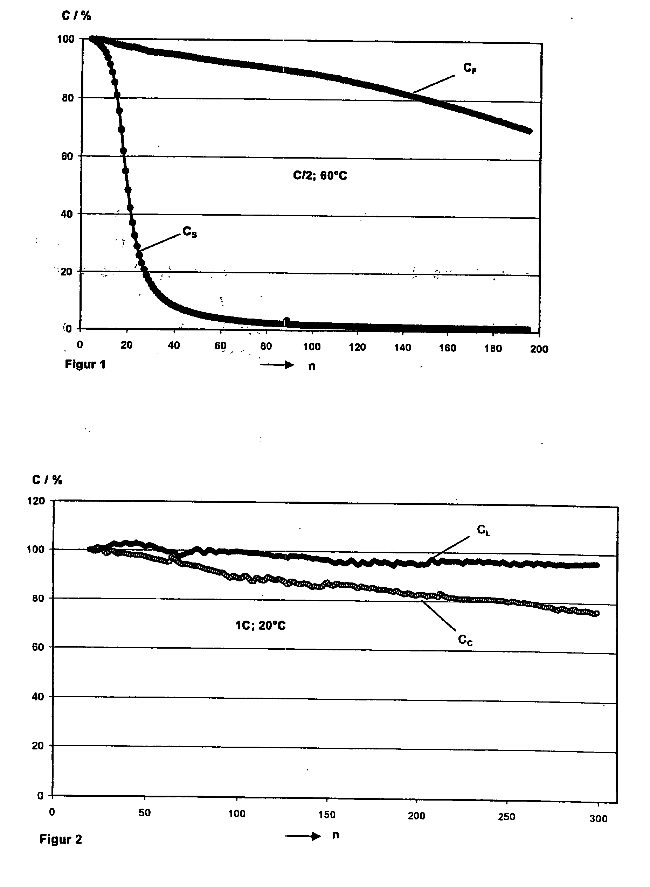

Durch die erfindungsgemäße elektrochemische Abscheidung von insbesondere Cu-Kristalliten auf eine Kupferfolie wird ein erheblicher Oberflächen- und Anbindungsvorteil erreicht, der bei Lithium-Polymer-Zellen den Wegfall des Primers ermöglicht und den Einsatz leicht zu verarbeitender Polymere in den Elektroden erlaubt, da diese nicht mehr zusätzlich die Haftung auf blanker Folie garantieren müssen. Insbesondere bei hohen Temperaturen (60° C) versagen zur Zeit Cu-Streckmetalle bei der Anbindung. Dies führt zur Ablösung des Aktivmaterials von der Ableiterelektrode, was die Zyklenstabilität negativ beeinflusst (s. Figur 1). Dies wird nicht nur auf eine Reaktion des Primers bei hohen Lithiumaktivitäten zurückgeführt, sondern auch durch die durch das Streckmetall bedingte asymmetrische Stromverteilung.

### Beispiel 1:

Für die Herstellung der negativen Elektrode werden 250 ml Aceton zusammen mit 27,8 g PVDF-HFP (Powerflex, Elf Atochem) im 500 ml Erlenmeyerkolben vorgelegt und im Wasserbad auf 42° C erwärmt. Mit einem IKA Mischer wird gerührt, bis das Polymer vollständig gelöst ist. Dann werden 6,2 g Leitruß (Super P, Sedema) und 275,3 g Kugelgraphit (MCMB 25-28, Osaka Gas) hinzugegeben und 2 h gerührt. Die Drehstufe ist dabei so stark eingestellt, dass gerade noch keine Luft untergerührt wird.

Für die positive Elektrode wird nach dem gleichen Schema verfahren, auf 250 ml Aceton kommen hier 24,8 g PVDF-HFP (Powerflex, Elf Atochem), 2,6 g Leitruß (Super P, Sedema), 2,6 g Graphit (KS 6, Timcal) als Leitfähigkeitsverbesserer sowie 276,2 g Litihumcobaltoxid (FMC).

Negative Elektrode und positive Elektrode werden mit einem Flächengewicht von 19 - 21 g/cm² mittels Tape-Casting hergestellt. Mylar (Polyesterfolie) dient als Trägerfolie. Die negative Elektrode wird anschließend auf eine erfindungsgemäß oberflächenbehandelte (Oberflächenbehandlung durch elektrochemische Abscheidung von Kupferkristalliten) und chromatisierte Kupferfolie bei einer Temperatur von 160° C auflaminiert. In gleicher Weise wird die positive Elektrodenfolie auf Aluminiumstreckmetall auflaminiert. Aus den so laminierten Streifen werden negative Elektroden und positive Elektroden ausgestanzt und diese zu Bi-Zellen (Positive Elektrode/Al-Streckmetall/Positive Elektrode, Separator, Negative Elektrode/Cu-Folie/Negative Elektrode, Positive Elektrode/Al-Streckmetall/Positive Elektrode) laminiert. Der Separator ist beispielsweise dreilagig (PP/PE/PP) und mit einer dünnen PVDF-HFP Schicht versehen. Zunächst wird der Separator bei 130 ° C beidseitig auf die negative Elektrode laminiert, und dann werden in einem zweiten Laminationsschritt bei gleichen Parametern die obere und untere positive Elektrode auflaminiert.

Parallel hierzu wird eine Zelle mit einem Cu-Streckmetall gemäß US 5 460 904 hergestellt. Stacks aus 6 Bi-Zellen werden mit beiden Varianten hergestellt.

Figur 1 zeigt die Abhängigkeit der Kapazität C in Abhängigkeit von der Zyklenzahl n für die erfindungsgemäßen Bi-Zellen mit Cu-Folie als Ableiter (C_{F}) und für Bi-Zellen gemäß US-PS 5 460 904 mit Cu-Streckmetall als Ableiter (Cₛ). Die Messungen erfolgten bei 60°C und einer Belastung von C/2 (Ladung 1C / 3 h / 60°C bis 4,2 V, Entladung 0,5 C / 60°C bis 3,0 V).

### Beispiel 2:

Eine Masse für die negative Elektrode wird gemäß Beispiel 1 hergestellt und diese statt auf Polyesterfolie direkt auf die auf eine erfindungsgemäß oberflächenbehandelte Cu-Ableitelektrode (Oberflächenbehandlung durch elektrochemische Abscheidung von Kupferkristalliten) aufgerakelt. Das Lösemittel läßt man verdampfen und die Elektrode haftet im getrockneten Zustand sehr gut auf der Ableitelektrode. Die so hergestellte Variante besteht statt aus sechs aus einer Bi-Zelle.

### Beispiel 3:

Für die Herstellung der negativen Elektrode werden 1 I Aceton zusammen mit 123,7 g PVDF-HFP (Powerflex, Elf Atochem) im 2 I Erlenmeyerkolben vorgelegt und im Wasserbad auf 42° C erwärmt. Mit einem IKA Mischer wird gerührt, bis das Polymer vollständig gelöst ist. Dann werden 261,2 g Dibuthylphtalat, 27,5 g Leitruß (Super P, Sedema) und 962 g Kugelgraphit (MCMB 25-28, Osaka Gas) hinzugegeben und 2 h gerührt. Die Drehstufe ist dabei so stark eingestellt, dass gerade noch keine Luft untergerührt wird.

Für die positive Elektrode wird nach dem gleichen Schema verfahren, auf 1,5 I Aceton kommen hier 99,0 g PVDF-HFP (Powerflex, Elf Atochem), 165,1 g Dibuthylphtalat, 66,0 g Leitruß (Super P, Sedema) als Leitfähigkeitsverbesserer sowie 939,7 g Litihumcobaltoxid (FMC).

Negative Elektrode und positive Elektrode werden mit einem Flächengewicht von 19 - 21 g/cm² mittels Tape-Casting hergestellt. Mylar (Polyesterfolie) dient als Trägerfolie. Die negative Elektrode wird anschließend auf eine erfindungsgemäß oberflächenbehandelte (Oberflächenbehandlung durch elektrochemische Abscheidung von Kupferkristalliten) und chromatisierte Kupferfolie bei einer Temperatur von 130° C auflaminiert. In gleicher Weise wird die positive Elektrodenfolie auf Aluminiumstreckmetall auflaminiert. Aus den so laminierten Streifen werden negative Elektroden und positive Elektroden ausgestanzt und diese zu Bi-Zellen (Positive Elektrode/Al-Streckmetall/Positive Elektrode, Separator, Negative Elektrode/Cu-Folie/Negative Elektrode, Positive Elektrode/Al-Streckmetall/Positive Elektrode) laminiert. Der Separator ist beispielsweise dreilagig (PP/PE/PP) und mit einer dünnen PVDF-HFP Schicht versehen. Zunächst wird der Separator bei 120 ° C beidseitig auf die negative Elektrode laminiert, und dann werden in einem zweiten Laminationsschritt bei gleichen Parametern die obere und untere positive Elektrode auflaminiert. Das Dibuthylphtalat wird dreimal mit n-Hexan extrahiert, bevor die Zellen teilverpackt, bei 80° C 16 h vakuumgetrocknet und anschließend mit einem Flüssigelektrolyten aktiviert werden. Es kann zur Extraktion des Dibuthylphtalates auch Diethylether verwendet werden.

Alternativ zur Cu-Folie kann auch eine Ni-Folie verwendet werden, als besonders vorteilhaft für die Anbindung hat sich Abscheidung von Silberkristalliten statt Kupfer- oder Nickelkristalliten erwiesen.

Figur 2 zeigt einen direkten Vergleich der Kapazität C in % in Abhängigkeit von der Zyklenzahl n bei einer 1 C Belastung und Raumtemperatur; C_{c} für auf Cu-Folie direkt naßchemisch aufgebrachte negative Elektrodenmasse (Beispiel 2) C_{L} für auf Cu-Folie auflaminierte Elektrodenfolien (Beispiel 3) (Ladung 1C/3h/20°C bis 4,2 V, Entladung 1C/20°C bis 3,0 V).

## Patentansprüche

1. Galvanisches Element mit mindestens einer lithiuminterkalierenden Elektrode, deren elektrochemisch aktives Material auf einen folienförmigen metallischen Ableiter aufgebracht ist, **dadurch gekennzeichnet, dass** der metallische Ableiter auf seiner Oberfläche mit elektrochemisch abgeschiedenen Kristalliten eines zweiten oder identischen Metalles versehen ist, die die Kontaktfläche vergrößern und den Übergangswiderstand zum aktiven Material verringern.

2. Galvanisches Element nach Anspruch 1, **dadurch gekennzeichnet, dass** Trägermaterial ausgewählt ist aus Al, Cu, V, Ti, Cr, Fe, Ni, Co oder Legierungen dieser Metalle oder aus einem korrosionsbeständigen Edelstahl.

3. Galvanisches Element nach den Ansprüchen 1 oder 2, **dadurch gekennzeichnet, dass** das abgeschiedene Metall ausgewählt ist aus Cu, V, Ti, Cr, Fe, Ni, Co, Zn, Sn, In, Sb, Bi, Ag oder Legierungen dieser Metalle.

4. Galvanisches Element nach einem der Ansprüche 1 bis 3, **dadurch gekennzeichnet, dass** die Kristallitgröße des elektrochemisch abgeschieden Materials zwischen 1 und 25 µm, vorzugsweise zwischen 1 und 10 µm, liegt.

5. Galvanisches Element nach einem oder mehreren der Ansprüche 1 bis 4, **dadurch gekennzeichnet, dass** die Dicke der Trägerfolie zwischen 5 und 50, vorzugsweise zwischen 8 und 25 µm, liegt.

6. Galvanisches Element nach einem oder mehreren der Ansprüche 1 bis 5, **dadurch gekennzeichnet, dass** auf der Trägerfolie maximal 10 Kristallitlagen, vorzugsweise 1 bis 3 Kristallitlagen, abgeschieden sind.

7. Galvanisches Element nach einem oder mehreren der Ansprüche 1 bis 6, **dadurch gekennzeichnet, dass** im Falle eines unedlen oder halbedlen Metalls die Kristallitschicht mit einer Korrosionsschicht versehen ist, die durch einen Tauchvorgang aufgebrachtes Benzotriazol oder eine Chromatisierung ist.

8. Galvanisches Element nach einem oder mehreren der Ansprüche 1 bis 7, **dadurch gekennzeichnet, dass** das aktive Elektrodenmaterial in Folienform auf die Ableiterfolie auflaminiert ist.
